# FASCICULE DE BREVET EUROPEEN

(11) **EP 3 515 585 B1**
(45) Date de publication et mention de la délivrance du brevet: **04.11.2020**
(21) Numéro de dépôt: 17769058.3
(22) Date de dépôt: 18.09.2017
(51) Int. Cl.: B01J 8/02, B01D 33/067, B01D 29/11, B01D 29/44

(54) **PAROI CYLINDRIQUE DE FILTRAGE DE PARTICULES SOLIDES DANS UN FLUIDE**
ZYLINDRISCHE WAND ZUM FILTERN VON FESTSTOFFPARTIKELN IN EINEM FLUID
CYLINDRICAL WALL FOR FILTERING SOLID PARTICLES IN A FLUID

(30) Priorité: 20.09.2016 FR 1658816
(43) Date de publication de la demande: 31.07.2019
(73) Titulaire: Total Raffinage Chimie, 92400 Courbevoie (FR)
(72) Inventeur: NASCIMENTO, Pedro, 76620 Le Havre (FR); SELMEN, Arnaud, 76620 Le Havre (FR); ALLEN, Matthew, Orange TX 77632 (US)
(74) Mandataire: Kerneur, Youen
(86) Numéro de dépôt international: PCT/EP2017/073476
(87) Numéro de publication internationale: WO 2018/054839

(56) Documents cités:
- EP-A1- 3 064 268
- EP-A1- 3 064 268
- US-A1- 2015 014 242
- US-A1- 2015 014 242

## Description

L'invention concerne une paroi cylindrique de filtrage de particules solides, par exemple une paroi de lit catalytique à flux radial. L'invention peut trouver une application par exemple dans les reformeurs catalytiques, dans les régénérateurs de reformage, dans le cadre d'autres procédés de transformation par déshydrogénation, et plus généralement dans le cadre de tout procédé de filtrage de particules solides dans un fluide au moyen d'une paroi cylindrique.

Les documents US 3,167,399, US 2,997,374 et l'article de F. Pradel et al., (2001) « A New Concept of Scallops Screens for Reactors of Refining », paru dans la revue Oil and Gas Science and Technology, décrivent des exemples de réacteurs à flux radial.

Ce type de réacteurs peut par exemple être utilisé dans des unités de reformage catalytique, dans d'autres unités de transformation par déshydrogénation, ou bien encore dans des unités de régénérateurs de reformage catalytique.

Le reformage catalytique permet de convertir des molécules naphténiques en molécules aromatiques ayant un indice d'octane plus élevé à des fins d'obtention de carburant automobile.

Le reformage peut être régénératif ou semi régénératif. Dans le cas d'un reformage régénératif, du catalyseur peut circuler entre des parois cylindriques concentriques d'un lit catalytique à flux radial. Dans le cas d'un reformage semi-régénératif, le catalyseur est simplement contenu dans l'espace annulaire défini par les parois concentriques.

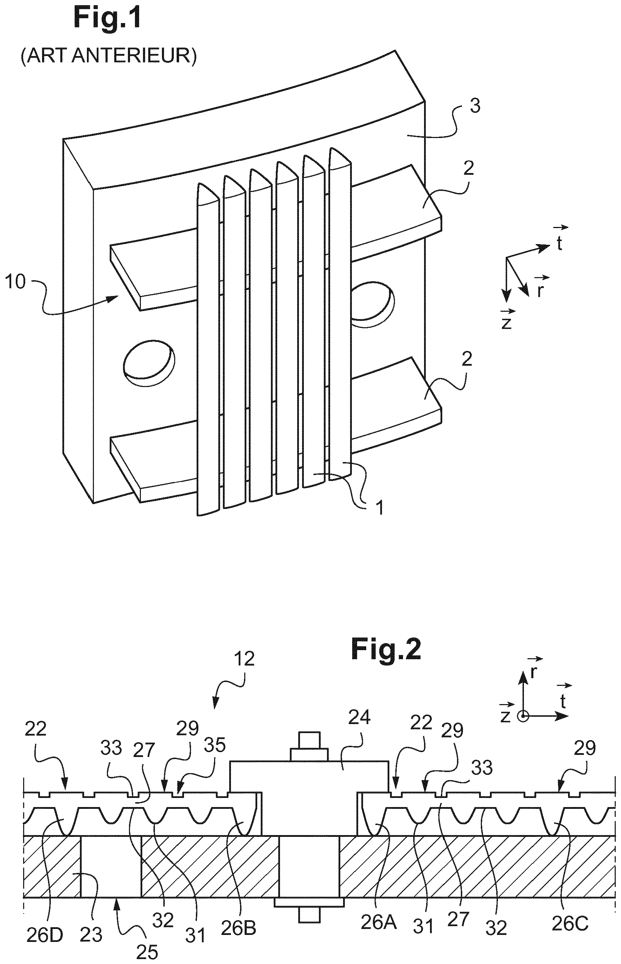

La figure 1 montre une portion d'un exemple de paroi cylindrique de filtrage selon l'art antérieur, pour un reformeur catalytique. Une paroi cylindrique de lit catalytique à flux radial comprend classiquement une plaque perforée 3 formant un élément cylindrique, dont une partie seulement est représentée sur la figure 1, et une grille 10, également représentée en partie seulement, formant un autre élément cylindrique, ces éléments cylindriques étant concentriques.

La grille 10 est destinée à être en contact avec le catalyseur non représenté. La grille 10 comprend des plats 2 s'étendant chacun suivant une direction tangentielle et disposés à des hauteurs diverses ainsi que des fils rigides 1 s'étendant verticalement et solidarisés aux plats par soudure. Seuls quelques fils 1 sont représentés sur la figure 1.

Une paroi de cylindre intérieur (« center pipe » en anglais) comprend une plaque perforée pour assurer une tenue mécanique. La grille participe à la rétention du catalyseur dans l'espace annulaire.

Afin que la grille forme un élément cylindrique, on solidarise l'ensemble des extrémités de plats 2 à la plaque perforée 3 au moyen d'une ligne de soudure verticale non représentée sur la figure 1. Cette ligne de soudure empêche le passage de catalyseur vers la plaque perforée.

Les documents WO 01/66239 et US 2008/0107575 décrivent des parois de panier extérieur (« outer basket » en anglais), réalisées à partir de plusieurs conduits longitudinaux creux, correspondant chacun à une plage angulaire.

Le document EP 3 064 268 A1 décrit une unité de reformage catalytique comprenant un réacteur à flux radial. A l'intérieur de ce réacteur est agencé un ensemble de collecte central retenant un lit catalytique. L'ensemble de collecte comprend une parois avec une grille cylindrique et un tube cylindre disposé dans l'espace circonscrit par la grille cylindrique. La grille est constituée d'un assemblage de fils métalliques profilés disposés parallèlement les uns aux autres le long de l'axe vertical de l'ensemble de collecte. La grille qui agit comme un tamis est conçue de manière à être perméable à un fluide gazeux et imperméable aux particules de catalyseur. Le tube cylindrique est également ajouré et comprend ainsi des trous traversant. Les fils verticaux présentent une première face et une seconde face opposée. La seconde face 14 n'est pas en contact avec le lit de catalyseur lorsque le conduit est mis en oeuvre dans le réacteur radial. Les fils profilés 12 sont maintenus solidaires entre eux par un ensemble d'anneaux de support métalliques 15 horizontaux soudés à la seconde face 14 des fils verticaux en tout point de contact avec ces derniers. Le document US 2015/0014242 A1 décrit une grille filtrante constituée d'un assemblage de fils métalliques profilés (44) disposés parallèlement les uns aux autres le long de l'axe vertical de l'ensemble de collecte. Les fils sont solidarisées entre eux au moyen de liaisons (27) entre fils adjacents et d' un anneau de soudure (52).

La grille est conçue et dimensionnée en fonction de l'installation à laquelle elle est destinée. Par exemple, dans le cas d'une paroi à conduits longitudinaux creux, du type de celles décrites dans les documents précités, on prévoira des éléments de grille avec des plats ayant une longueur et un rayon de courbure fonctions des structures de conduit attendues.

Il existe un besoin pour une grille plus adaptable.

Il est proposé une paroi cylindrique de filtrage de particules solides dans un fluide, au travers de laquelle ce fluide est susceptible de circuler, cette paroi comprenant
au moins une plaque perforée présentant un rayon de courbure fini, et
au moins un élément de grille superposé à cette plaque perforée, cet élément de grille comprenant une pluralité de fils rigides s'étendant chacun suivant une direction longitudinale et disposés adjacents les uns par rapport aux autres afin de filtrer les particules solides.

Selon l'invention, l'élément de grille est agencé pour que les fils soient solidarisés entre eux uniquement au moyen de liaisons entre fils adjacents, chaque liaison entre deux fils adjacents occupant seulement une portion de la longueur des fils.

Chaque liaison entre deux fils peut présenter une épaisseur, suivant la direction radiale, inférieure ou égale à l'épaisseur de ces fils à proximité de cette liaison.

Ainsi, on remplace les plats rigides par des liaisons relativement ponctuelles, afin de laisser le fluide circuler entre les fils, et relativement souples, de sorte que l'élément de grille peut être courbé relativement facilement. On peut ainsi prévoir de fabriquer les mêmes éléments de grille pour diverses parois de filtrage, indépendamment des rayons de courbure de ces parois.

En outre, les liaisons entre les fils étant relativement ponctuelles, elles peuvent être défaites relativement facilement, par exemple au moyen d'un outil du type scie à métaux, cisaille, ou autre, permettant là encore de s'adapter à différentes parois de filtrage, par exemple à des parois à conduits longitudinaux, des parois de structure de cylindres concentriques, ou autre.

En revanche, en cas de rupture accidentelle d'une seule liaison, les fils correspondants peuvent rester en place dans la mesure où ces fils sont solidarisés entre eux et à d'autres fils au moyen d'autres liaisons. Une rupture accidentelle d'une liaison porte donc moins à conséquence qu'une rupture d'une soudure d'un fil à un plat dans le cas d'une grille selon l'art antérieur.

Par « une pluralité de fils », on entend un nombre de fils de préférence supérieur à cinq, avantageusement supérieur à dix ou vingt.

Les fils peuvent par exemple avoir une épaisseur, suivant la direction radiale, de l'ordre de un ou plusieurs millimètres, par exemple comprise entre 0,7 et 20 millimètres, avantageusement entre 1 et 10 millimètres.

Les fils peuvent par exemple avoir une largeur, suivant la direction tangentielle de l'ordre de un ou plusieurs millimètres, par exemple comprise entre 0,7 et 10 millimètres, avantageusement entre 1 et 5 millimètres.

La largeur de l'espace entre deux fils adjacents, suivant la direction tangentielle, peut par exemple être de l'ordre du dixième de millimètres ou du millimètre, par exemple comprise entre 0,02 et 10 millimètres, avantageusement entre 0,5 et 1 millimètre.

Bien entendu, les dimensions des fils et leur disposition peuvent être choisis en fonction de l'application souhaitée, en prenant en particulier en compte la granulométrie des particules à filtrer, pour choisir notamment l'espacement entre les fils, et la vitesse attendue de circulation du fluide, pour choisir notamment les dimensions et le(s) matériau(x) des fils.

Les liaisons entre fils occupent une portion seulement de la longueur des fils, représentant par exemple moins de 20% de la longueur des fils, avantageusement moins de 10% de la longueur des fils. Les liaisons peuvent par exemple s'étendre suivant la direction longitudinale sur une longueur comprise entre 0,2 et 20 millimètres, avantageusement entre 0,7 et 5 millimètres.

Avantageusement, au moins une et de préférence chaque liaison entre deux fils peut avoir une épaisseur, suivant la direction radiale, inférieure à 0,7 fois l'épaisseur à proximité de cette liaison de ces deux fils, avantageusement inférieure ou égale à 0,5 fois cette épaisseur, par exemple inférieure ou égale à 0,4 fois cette épaisseur. Les liaisons ponctuelles peuvent ainsi être relativement peu épaisses, ce qui peut leur conférer souplesse et éventuellement facilité de rupture.

Chaque liaison entre deux fils s'étend radialement entre une extrémité interne de liaison destinée à être en regard de la plaque perforée et une extrémité externe de liaison.

A proximité de cette liaison, chacun de ces deux fils s'étend radialement entre une extrémité interne de fil destinée à être en regard de la plaque perforée et une extrémité externe de fil.

Avantageusement, pour au moins une, et de préférence chaque liaison entre deux fils, l'extrémité externe de liaison est en deçà des extrémités externes de fil des deux fils adjacents, de sorte que ces deux fils et cette liaison définissent une gorge formant passage entre les espaces inter-fils de part et d'autre de cette liaison. On évite ainsi l'accumulation contre la liaison de particules circulant entre les fils.

L'invention n'est en rien limitée à cette gorge, et alternativement, on pourrait prévoir que la liaison affleure à la surface externe des fils.

Avantageusement, au moins une et de préférence chaque liaison entre deux fils peut être réalisée dans le même matériau que ces deux fils.

Dans un mode de réalisation avantageux, l'élément de grille peut être obtenu par impression 3D, par exemple par impression 3D métallique. On pourra en particulier avoir recours à :
- une technologie de type Fusion Laser ou SML (pour « Selective Laser Melting » en anglais),
- une technologie de fabrication 5 axes, par exemple un procédé DMD (pour « Direct Metal Déposition » en anglais),
- une technologie FDM (pour « Fused Déposition Modeling » en anglais), par exemple une technologie de fabrication additive par faisceau d'électrons, par exemple la technologie EBAM™ (pour « Electron Beam Additive Manufacturing » en anglais) exploitée par la société Sciaky, Inc., ou
- autre.

La fabrication de l'élément de grille peut ainsi être menée relativement rapidement, et la logistique peut être simplifiée dans la mesure où l'impression peut être réalisée facilement sur demande.

Dans un mode de réalisation, les liaisons entre les fils peuvent être alignées entre elles, mais alternativement et avantageusement on pourra prévoir des liaisons non-alignées, par exemple en quinconce, pour au moins certaines des liaisons. Une telle répartition des liaisons sur l'ensemble de l'élément de grille peut permettre de conférer davantage de flexibilité.

Ainsi, avantageusement, pour au moins un fil solidarisé à un premier et un deuxième fils adjacents situés de part et d'autre dudit fil, les liaisons solidarisant ledit fil au premier fil adjacent peuvent être décalées relativement aux liaisons solidarisant ledit fil au deuxième fil adjacent.

L'élément de grille peut comprendre deux fils d'extrémité formant deux bords opposés de l'élément de grille.

Avantageusement, au moins un fil peut, sur au moins une partie de sa longueur, s'étendre radialement vers la plaque perforée sur une épaisseur supérieure à l'épaisseur d'autres fils de l'élément de grille ou à l'épaisseur de cet au moins un fil sur le reste de sa longueur. Cette ou ces surépaisseur(s) peuvent ainsi permettre de renforcer mécaniquement la grille et de mieux absorber d'éventuels efforts ayant une composante suivant la direction radiale.

Dans un mode de réalisation, au moins un fil peut, sur la totalité de sa longueur, s'étendre radialement vers la plaque perforée sur une épaisseur supérieure à l'épaisseur d'autres fils de l'élément de grille.

En particulier, on pourra prévoir qu'au moins un des deux fils d'extrémité de l'élément de grille présente une épaisseur supérieure à l'épaisseur de tout ou partie d'autres fils de l'élément de grille. Les fils d'extrémité peuvent ainsi assurer une fonction d'étanchéité, en ce sens que cette surépaisseur peut venir fermer un éventuel chemin de passage des particules solides via les bords d'extrémité longitudinaux.

Avantageusement, au moins un autre fil que ces fils d'extrémité peut aussi s'étendre radialement vers la plaque perforée sur une épaisseur supérieure à l'épaisseur de tout ou partie d'autres fils de l'élément de grille, permettant ainsi de limiter les déformations de l'élément de grille en cas d'efforts ayant une composante suivant la direction radiale.

Dans un mode de réalisation, au moins un autre fil que ces fils d'extrémité peut aussi s'étendre radialement vers la plaque perforée sur une épaisseur supérieure à l'épaisseur de tout ou partie d'autres fils de l'élément de grille, mais inférieure à l'épaisseur des fils d'extrémité, permettant ainsi de concilier limitation des déformations en cas d'efforts radiaux et flexibilité de l'élément de grille.

Dans un mode de réalisation, au moins un fil, avantageusement plusieurs, distinct des fils d'extrémité, peut, sur une portion seulement de sa longueur, s'étendre radialement vers la plaque perforée sur une épaisseur supérieure à l'épaisseur du reste de sa longueur. Les zones de surépaisseur sont ainsi relativement ponctuelles, permettant là encore de concilier limitation des déformations en cas d'efforts radiaux et flexibilité de l'élément de grille.

Avantageusement, la portion du fil le long de laquelle le fil présente une telle surépaisseur peut être plus longue qu'un diamètre d'orifice de la plaque perforée. On évite ainsi d'éventuelles déformations de l'élément de grille au niveau de ces orifices.

Les portions des fils présentant une épaisseur supérieure à l'épaisseur de tout ou partie du reste de ces fils peuvent avantageusement être disposées à une/des zone(s) d'extrémité des fils, permettant d'assurer une fonction d'étanchéité, en ce que sens que les particules de diamètre supérieur à l'espace entre deux fils ne peuvent pas passer sous l'élément de grille en utilisant un chemin via les bords d'extrémité tangentiels.

Ces portions disposées une/des zones d'extrémité des fils peuvent présenter une épaisseur égale à l'épaisseur des fils d'extrémité.

Alternativement, les fils peuvent présenter des zones extrémités en biais, c'est-à-dire que sur une zone de par exemple quelques millimètres ou centimètres, l'épaisseur du fil diminue au fur et à mesure que l'on se rapproche de l'extrémité du fil. Des tels fils en biseau peuvent en particulier être prévus dans le cas d'éléments de grille à superposer à un autre élément de grille, par exemple à visser sur cet autre élément de grille en cas de défaillance de cet autre élément de grille.

Des portions des fils présentant une épaisseur supérieure à l'épaisseur du reste de ces fils peuvent avantageusement être disposées à d'autres emplacements que ces zones d'extrémité.

Avantageusement, des portions des fils présentant une épaisseur supérieure à l'épaisseur du reste de ces fils peuvent être décalées les unes par rapport aux autres. Du fait de cette répartition des zones de surépaisseur, l'élément de grille peut être particulièrement flexible.

Avantageusement, au moins un fil présente sur toute sa longueur une section dont la largeur, suivant la direction tangentielle, est plus faible au niveau d'une première extrémité de section de fil en regard de la plaque perforée qu'au niveau d'une deuxième extrémité de section de fil opposée à cette première extrémité, par exemple une section triangulaire ou trapèze. Ainsi, si l'élément de grille est courbé afin de pouvoir être installée sur une paroi cylindrique de rayon de courbure relativement faible, la largeur réduite des fils à leurs extrémités internes permet d'éviter ou de limiter des efforts dus aux contacts entre fils adjacents, et de limiter l'accumulation de particules solides entre les extrémités internes des fils.

La paroi décrite ci-dessus peut par exemple une paroi de lit catalytique à flux radial destinée à être en contact avec un catalyseur, ou autre.

Cette paroi peut par exemple être une paroi à conduits longitudinaux, ou autre.

Avantageusement, cette au moins une plaque perforée peut former un cylindre perforé s'étendant suivant une direction longitudinale.

Avantageusement, cet au moins un élément de grille peut former un ensemble de grille, à forme générale de cylindre, destiné à être en contact avec les particules solides, l'ensemble de grille et le cylindre perforé étant concentriques.

On peut par exemple prévoir de fixer le ou les éléments de grille au moyen d'un cordon de soudure, du type connu de l'art antérieur, afin d'assurer une fixation des bords d'extrémité du ou des éléments de grille entre eux et sur le cylindre perforé.

Avantageusement, la paroi peut comporter en outre des moyens d'assemblage dudit au moins un élément de grille afin de former l'ensemble de grille, ces moyens d'assemblage étant agencés pour assurer une fixation dudit au moins un élément de grille démontable sur la plaque perforée.

Ainsi, on conserve une structure de cylindres concentriques, de conception et de fabrication plus simples que les structures à conduits longitudinaux, et ce tout en limitant les contraintes mécaniques, ce qui permet de limiter les arrêts de réacteurs par rapport aux parois de l'art antérieur dans lesquelles la soudure longitudinale est soumise aux efforts liés aux dilatations du cylindre de grille et à la dilatation du cylindre perforé.

Dans un mode de réalisation, on peut prévoir un seul élément de grille pour l'ensemble de grille, mais avantageusement, l'ensemble de grille peut comprendre plusieurs éléments de grille.

Lorsque plusieurs éléments de grille sont ainsi prévus, on peut fabriquer l'ensemble de grille par secteurs, et le cas échéant de remplacer les éléments de grille indépendamment les uns des autres. Par exemple, si un élément de grille s'avère défaillant, on peut le retirer et le remplacer par un élément de grille fonctionnel, et ce tout en laissant les autres éléments de grille inchangés.

Avantageusement, on choisira des éléments de grille dimensionnés pour pouvoir passer par un trou d'homme défini dans le réacteur, afin de faciliter ces opérations.

La paroi de lit catalytique peut être une paroi de cylindre intérieur, de diamètre relativement restreint par rapport au diamètre d'une section de réacteur, ou bien encore un panier extérieur de diamètre plus élevé.

Selon les conditions opératoires de l'unité à laquelle est destinée cette paroi cylindrique, le catalyseur peut circuler ou non.

Les particules solides, par exemple de catalyseur, peuvent par exemple se présenter sous forme de grains avec une granulométrie centrée autour d'un ou quelques millimètre(s). Par exemple, la taille moyenne des grains de catalyseur (de forme sphérique ou extrudés) peut varier entre 0,5 et 5,0 mm, avantageusement entre 1 et 3 mm. Le catalyseur étant sujet à l'érosion et à l'attrition, une partie des grains de catalyseur peut avoir un diamètre compris entre 0,7 et 1,0 mm.

Le catalyseur est destiné à être contenu dans un espace annulaire entre deux parois de lit catalytique à flux radial dont l'une au moins est telle que décrite ci-dessus.

Un fluide est destiné à circuler radialement, par exemple depuis l'extérieur de la paroi la plus externe, ou panier extérieur, vers l'autre paroi dite de cylindre intérieur. Le fluide traverse le lit catalytique et est collecté dans le cylindre intérieur.

Alternativement, le fluide peut s'écouler du cylindre intérieur vers le panier extérieur. L'ensemble de grille et le cylindre perforé permettent le passage du fluide tout en empêchant le catalyseur de passer à l'intérieur du cylindre intérieur ou, le cas échéant, à l'extérieur du panier extérieur.

De manière générale, la paroi cylindrique peut être conçu pour filtrer des particules présentes à l'extérieur du cylindre, le fluide entrant vers l'intérieur du cylindre et les fils étant alors disposés à l'extérieur du cylindre, ou bien pour filtrer des particules présentes à l'intérieur du cylindren le fluide circulant alors de l'intérieur vers l'extérieur du cylindre et la plaque perforée étant alors à l'extérieur de la paroi.

Il est en outre proposé un réacteur comprenant une paroi tel que décrite ci-dessus, par exemple une paroi de lit catalytique à flux radial, étant entendu que l'invention n'est en rien limitée à cet exemple d'application.

Il est en outre proposé une unité de reformage catalytique comprenant un réacteur tel que décrit ci-dessus.

La paroi peut être une paroi de cylindre intérieur, ou non.

Il est en outre proposé un procédé de fabrication d'un élément de grille tel que décrit ci-dessus par impression 3D métallique.

Il est aussi proposé une paroi cylindrique de filtrage de particules solides dans un fluide, au travers de laquelle un fluide est susceptible de circuler, cette paroi comprenant au moins une plaque perforée présentant un rayon de courbure fini, et au moins un élément de grille superposé à cette plaque perforée, cet élément de grille comprenant une pluralité de fils rigides s'étendant chacun suivant une direction ayant une composante longitudinale et disposés adjacents les uns par rapport aux autres afin de filtrer les particules solides. L'élément de grille est agencé pour que les fils soient solidarisés entre eux uniquement au moyen de liaisons entre deux fils adjacents, chaque liaison entre deux fils adjacents occupant seulement une portion de la longueur des fils et étant suffisamment souples pour que l'élément de grille soit flexible, afin que l'élément de grille puisse être installé sur des parois cylindriques de diamètres variés.

L'invention peut trouver une application par exemple dans les reformeurs catalytiques, dans les régénérateurs de reformage, dans le cadre d'autres procédés de transformation par déshydrogénation, et plus généralement dans le cadre de tout procédé de filtrage de particules solides dans un fluide au moyen d'une paroi cylindrique.

L'invention sera mieux comprise en référence aux figures ; lesquelles illustrent des modes de réalisation donnés à titre d'exemple et non limitatifs.
- La figure 1 montre une partie d'un exemple de paroi de reformeur catalytique selon l'art antérieur.
- La figure 2 est une vue de coupe d'un exemple de portion de paroi de cylindre intérieur (« center pipe » en anglais) de lit catalytique à flux radial selon un mode de réalisation de l'invention,
- La figure 3 est une vue suivant la direction radiale d'un exemple d'élément de grille pour une paroi selon un autre mode de réalisation de l'invention,
- La figure 4 montre un exemple d'élément de grille pour une paroi selon encore un autre mode de réalisation de l'invention.

Les proportions ne sont pas forcément respectées d'une figure à l'autre.

En revanche, on pourra utiliser des références identiques d'une figure à l'autre pour désigner des éléments identiques ou similaires.

En référence à la figure 2, un réacteur de reformage non représenté peut comprendre un panier extérieur et un cylindre intérieur dont une portion est ici représentée.

Une paroi 12 de cylindre intérieur comprend des éléments de grille 22 et une plaque perforée 23 superposés et maintenus ensemble par une bride 24 fixée au moyen d'un écrou sur la plaque perforée 23.

L'élément de plaque perforée 23 définit des trous 25, les trous 25 ayant un diamètre de l'ordre de 1-2 centimètres.

L'élément de plaque perforée présente une épaisseur, dans le sens radial, également de l'ordre du centimètre.

Chaque élément de grille 22 est destiné être en contact avec un catalyseur non représenté.

Du fluide non représenté est destiné à traverser cette portion de cylindre intérieur 12 par un écoulement sensiblement radial.

Chaque élément de grille 22 comprend une pluralité de fils 26 disposés adjacents deux à deux de façon à former une nappe.

Les fils 26 s'étendent suivant la direction longitudinale *̅z̅*̅.

Ces fils 26 ont une section de forme grossièrement triangulaire, une des pointes 31 du triangle étant en regard de la plaque perforée 23, une face 29 du triangle étant en contact avec le catalyseur.

Les faces supérieures 29, destinées à être en contact avec les particules solides, ont une largeur de 1 ou 2 millimètres environ.

Les fils 26 s'étendent radialement vers la plaque perforée 23 et ont une épaisseur par exemple de l'ordre de 2 à 4 millimètre.

Les grains de catalyseur peuvent par exemple avoir des dimensions de l'ordre du millimètre, par exemple un diamètre moyen de particule entre 1.0 et 3.0 millimètres.

L'espace entre deux fils adjacents étant relativement restreint (inférieur au diamètre moyen des particules du catalyseur), par exemple de l'ordre du demi-millimètre, les éléments de grille 22 participent à la rétention du catalyseur et ce malgré le passage du fluide à travers la paroi.

Des liaisons ponctuelles 27 permettent de solidariser les fils deux à deux.

Les fils et les liaisons ponctuelles 27 sont réalisées en métal, par impression 3D, par exemple en fer, en acier, ou autre.

Ces liaisons 27 s'étendent suivant la direction longitudinale sur par exemple 1 ou 2 millimètres, et ont une épaisseur, suivant la direction radiale de 1 ou 2 millimètres environ.

Chaque liaison 27 s'étend radialement entre une extrémité interne 32 et une extrémité externe 33.

L'extrémité externe 33 est en deçà des faces supérieures 29 des fils, c'est-à-dire que l'extrémité interne 33 est plus proche de la plaque perforée 23 que ces faces 29.

Chaque liaison 27 définit donc avec les parties des fils adjacents à proximité de cette liaison une gorge 35 s'étendant longitudinalement, ici sur 1 ou 2 millimètres. Ces gorges 35 sont dans la continuité des espaces entre les fils correspondant, permettant ainsi une meilleur circulation des particules solides.

Dans cet exemple, ces liaisons 27 sont alignées entre elles.

Ainsi chaque liaison ponctuelle 27 solidarisant deux fils entre eux est alignée avec les deux liaisons ponctuelles solidarisant chacune un de ces deux fils vers un autre fil. Chaque élément de grille 22 définit ainsi des ensembles de liaisons ponctuelles, les liaisons ponctuelles de chaque ensemble étant alignées entre elles. Ces ensembles tendent à rigidifier légèrement l'élément de grille.

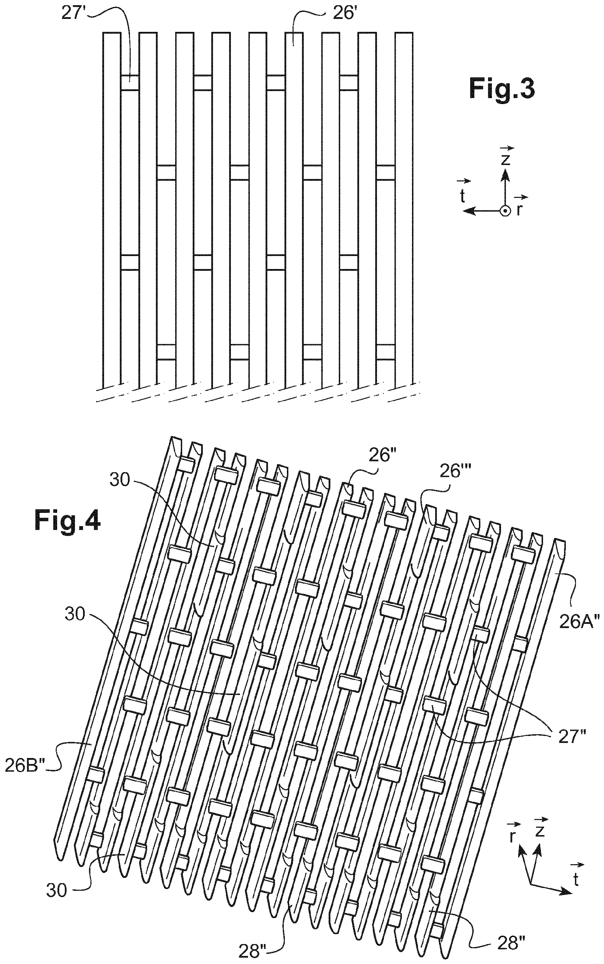

En revanche, dans le mode de réalisation de la figure 3, les liaisons ponctuelles 27' solidarisant les fils 26' entre eux sont en quinconce, et disposées de façon à maximiser les distances entre liaisons, permettant ainsi d'obtenir un élément de grille particulièrement flexible.

Pour revenir à la figure 2, des fils 26A, 26B aux extrémités des éléments de grille 22 présentent une épaisseur, dans le sens radial, supérieure à celle d'autres fils 26, par exemple une épaisseur de l'ordre du centimètre quand celle des fils 26 est de 4 millimètres. Ceci permet d'empêcher que des particules ne circulent via un chemin passant sous ces fils d'extrémité.

On peut en outre prévoir des fils de renforcement, notamment un fil principal 26D ayant une épaisseur identique ou proche de celle des fils 26A, 26B, et un fil de renforcement secondaire 26C ayant une épaisseur inférieure à celle des fils 26A, 26B mais supérieure à celle des fils 26, par exemple de 7 ou 8 millimètres environ. Ces fils de renforcement peuvent permettre de limiter les déformations de l'élément de grille 22 lors que cet élément subit des efforts radiaux vers la plaque perforée 23.

En référence à la figure 4, les fils 26", 26'" distinct des fils d'extrémité 26A", 26B" présentent chacun une zone d'extrémité 28" relativement épaisse. Pour chacun de ces fils 26", 26''', la zone correspondante 28" est située à l'extrémité de ce fil.

Alternativement, dans un mode de réalisation avantageux et non représenté, chacun des fils distinct des fils d'extrémité présente une surépaisseur à chacune de ses deux extrémités.

Ces zones de surépaisseur à (aux) l'extrémité(s) de chaque fil permet de renforcer le filtrage, en ce sens que ces zones 28" empêchent la circulation des particules par un passage passant sous ces extrémités.

Hormis ces surépaisseurs localisées à une des extrémités, chaque fil 26" présente une section relativement identique sur toute sa longueur, de forme triangulaire ou évasée.

En revanche, les fils 26'" présentent d'autres zones de surépaisseur 30, ces zones 30 occupant une portion seulement de la longueur des fils correspondant, longue de par exemple 2 ou 3 centimètres et s'étendant radialement sur une épaisseur égale à l'épaisseur des zones de surépaisseur 28" à (aux) l'extrémité(s) de chaque fil.

Ces zones 30 sont ici disposées en quinconque, c'est-à-dire que ces zones de surépaisseur 30 sont réparties sur l'ensemble de l'élément de grille.

En outre, des fils d'extrémité 26A", 26B" ont aussi une épaisseur relativement élevée, par exemple égale à l'épaisseur des zones de surépaisseur 28" à (aux) l'extrémité(s) de chaque fil.

## Revendications

1. Paroi (12) cylindrique de filtrage de particules solides dans un fluide, au travers de laquelle ce fluide est susceptible de circuler, cette paroi comprenant
au moins une plaque perforée (23) présentant un rayon de courbure fini, et
au moins un élément de grille (22) superposé à cette plaque perforée, cet élément de grille comprenant une pluralité de fils (26, 26A, 26B, 26C, 26D) rigides s'étendant suivant une direction longitudinale et disposés adjacents les uns par rapport aux autres afin de filtrer les particules solides,
**caractérisé en ce que**
l'élément de grille est agencé pour que les fils soient solidarisés entre eux uniquement au moyen de liaisons (27) entre fils adjacents, chaque liaison entre deux fils adjacents occupant seulement une portion de la longueur desdits fils, et présentant une épaisseur inférieure ou égale à l'épaisseur de ces fils à proximité de cette liaison.

2. Paroi (12) selon la revendication 1, dans laquelle
chaque liaison (27) entre deux fils (26, 26A, 26B, 26C, 26D) s'étend radialement entre une extrémité interne de liaison (32) en regard de la plaque perforée et une extrémité externe de liaison (33),
à proximité de cette liaison, chacun de ces deux fils s'étend radialement entre une extrémité interne de fil destinée à être en regard de la plaque perforée et une extrémité externe de fil (29),
**caractérisé en ce que**
pour au moins une liaison entre deux fils, l'extrémité externe de ladite liaison est en deçà des extrémités externes de fil desdits deux fils adjacents, de sorte que ces deux fils et cette liaison définissent une gorge (35) formant passage entre les espaces entre ces fils de part et d'autre de cette liaison.

3. Paroi (12) selon la revendication 1 ou 2, dans laquelle, au moins un fil (26, 26A, 26B, 26C, 26D) présente sur toute sa longueur une section dont la largeur, suivant la direction tangentielle, est plus faible au niveau d'une première extrémité de section de fil en regard de la plaque perforée qu'au niveau d'une deuxième extrémité (29) de section de fil opposée à cette première extrémité.

4. Paroi selon l'une quelconque des revendications 1 à 3, dans laquelle, pour au moins un fil (26'; 26", 26A", 26B") solidarisé à un premier et un deuxième fils adjacents situés de part et d'autre dudit fil, les liaisons (27' ; 27") solidarisant ledit fil au premier fil adjacent sont décalées relativement aux liaisons solidarisant ledit fil au deuxième fil adjacent.

5. Paroi (12) selon l'une quelconque des revendications 1 à 4, dans laquelle, au moins un fil (26A, 26B, 26C, 26D ; 26", 26A", 26B") s'étend, sur au moins une partie de sa longueur, radialement vers la plaque perforée sur une épaisseur supérieure à l'épaisseur d'autres fils (26 ; 26") de l'élément de grille ou à l'épaisseur de cet au moins un fil (26") sur le reste de sa longueur.

6. Paroi (12) selon la revendication 5, dans lequel l'élément de grille comprend deux fils d'extrémité (26A, 26B ; 26A", 26B") formant deux bords opposés de l'élément de grille,
**caractérisé en ce que** au moins un des deux fils d'extrémité de l'élément de grille présente une épaisseur supérieure à l'épaisseur de tout ou partie d'autres fils (26, 26C ; 26", 26''') de l'élément de grille.

7. Paroi (12) selon la revendication 5 ou 6, dans lequel au moins un des fils (26C, 26D) distinct des fils d'extrémité (26A, 26B) de l'élément de grille présente une épaisseur supérieure à l'épaisseur de tout ou partie d'autres fils (26) de l'élément de grille.

8. Paroi (12) selon l'une quelconque des revendications 5 à 7, dans lequel au moins un fil (26", 26''') distinct des fils d'extrémité (26A", 26B") s'étend, sur au moins une portion (28") seulement de sa longueur à au moins une zone d'extrémité dudit fil, radialement, vers la plaque perforée sur une épaisseur supérieure à l'épaisseur de tout ou partie du reste de sa longueur.

9. Paroi (12) selon l'une quelconque des revendications 5 à 8, dans lequel au moins deux fils (26"') distincts des fils d'extrémité (26A", 26B") s'étendent, sur au moins une portion (30) seulement de leur longueur, radialement vers la plaque perforée sur une épaisseur supérieure à l'épaisseur du reste de leur longueur, dans lequel lesdites portions présentant cette épaisseur supérieure sont disposées décalées les unes par rapport aux autres.

10. Paroi (12) selon l'une quelconque des revendications 1 à 9, dans laquelle
cette au moins une plaque perforée forme un cylindre perforé s'étendant suivant une direction longitudinale,
cet au moins un élément de grille forme un ensemble de grille, à forme générale de cylindre, destiné à être en contact avec les particules solides, et
l'ensemble de grille et le cylindre perforé sont concentriques.

11. Réacteur comprenant une paroi (12) selon l'une quelconque des revendications 1 à 10.

12. Unité de reformage catalytique comprenant un réacteur selon la revendication 11.

13. Unité de reformage catalytique selon la revendication 12, dans lequel la paroi selon l'une quelconque des revendications 1 à 10 est une paroi de cylindre intérieur.

14. Procédé de fabrication d'un élément de grille pour une paroi selon l'une quelconque des revendications 1 à 10 par impression 3D métallique.

## Patentansprüche

1. Zylindrische Wand (12) zum Filtern von Feststoffpartikeln in einem Fluid, durch die dieses Fluid zu zirkulieren imstande ist, wobei diese Wand umfasst
mindestens eine Lochplatte (23) mit einem endlichen Krümmungsradius, und
mindestens ein Gitterelement (22), das dieser Lochplatte überlagert ist, wobei dieses Gitterelement eine Mehrzahl von starren Drähten (26, 26A, 26B, 26C, 26D) umfasst, die sich in einer Längsrichtung erstrecken und benachbart im Verhältnis zueinander angeordnet sind, um die Feststoffpartikel zu filtern,
**dadurch gekennzeichnet, dass**
das Gitterelement derart angeordnet ist, damit die Drähte nur durch Verbindungen (27) zwischen benachbarten Drähten miteinander fest verbunden sind, wobei jede Verbindung zwischen zwei benachbarten Drähten nur einen Abschnitt der Länge der Drähte einnimmt und eine Dicke von weniger als oder gleich der Dicke dieser Drähte in der Nähe dieser Verbindung aufweist.

2. Wand (12) nach Anspruch 1, wobei
sich jede Verbindung (27) zwischen zwei Drähten (26, 26A, 26B, 26C, 26D) radial zwischen einem inneren Verbindungsende (32) gegenüber der Lochplatte und einem äußeren Verbindungsende (33) erstreckt,
sich in der Nähe dieser Verbindung jeder dieser zwei Drähte radial zwischen einem inneren Drahtende, das der Lochplatte gegenüberliegen soll, und einem äußeren Drahtende (29) erstreckt,
**dadurch gekennzeichnet, dass**
sich für mindestens eine Verbindung zwischen zwei Drähten das äußere Ende der Verbindung unterhalb der äußeren Drahtenden der zwei benachbarten Drähte befindet, sodass diese zwei Drähte und diese Verbindung eine Nut (35) definieren, die einen Durchgang zwischen den Zwischenräumen zwischen diesen Drähten auf beiden Seiten dieser Verbindung bildet.

3. Wand (12) nach Anspruch 1 oder 2, wobei mindestens ein Draht (26, 26A, 26B, 26C, 26D) über dessen gesamte Länge einen Querschnitt aufweist, dessen Breite in tangentialer Richtung im Bereich eines ersten Endes des Drahtquerschnitts gegenüber der Lochplatte geringer als im Bereich eines zweiten Endes (29) des Drahtquerschnitts gegenüber diesem ersten Ende ist.

4. Wand nach einem der Ansprüche 1 bis 3, wobei für mindestens einen Draht (26'; 26", 26A", 26B"), der mit einem ersten und einem zweiten benachbarten Draht fest verbunden ist, die sich auf beiden Seiten des Drahtes befinden, die Verbindungen (27'; 27"), die den Draht mit dem ersten benachbarten Draht verbinden, relativ zu den Verbindungen versetzt sind, die den Draht mit dem zweiten benachbarten Draht fest verbinden.

5. Wand (12) nach einem der Ansprüche 1 bis 4, wobei sich mindestens ein Draht (26A, 26B, 26C, 26D; 26", 26A", 26B") über mindestens einen Teil von dessen Länge radial zur Lochplatte über eine Dicke erstreckt, die größer ist als die Dicke anderer Drähte (26; 26") des Gitterelements oder die Dicke dieses mindestens einen Drahtes (26") über den Rest von dessen Länge.

6. Wand (12) nach Anspruch 5, wobei das Gitterelement zwei Enddrähte (26A, 26B; 26A", 26B") umfasst, die zwei gegenüberliegende Kanten des Gitterelements bilden, **dadurch gekennzeichnet, dass** mindestens einer der zwei Enddrähte des Gitterelements eine Dicke aufweist, die größer ist als die Dicke der Gesamtheit oder eines Teils anderer Drähte (26, 26C; 26", 26''') des Gitterelements.

7. Wand (12) nach Anspruch 5 oder 6, wobei mindestens einer der sich von den Enddrähten (26A, 26B) des Gitterelements unterscheidenden Drähte (26C, 26D) eine Dicke aufweist, die größer ist als die Dicke der Gesamtheit oder eines Teils anderer Drähte (26) des Gitterelements.

8. Wand (12) nach einem der Ansprüche 5 bis 7, wobei sich mindestens ein sich von den Enddrähten (26A", 26B") unterscheidender Draht (26", 26"') über mindestens einen Abschnitt (28") nur von dessen Länge an mindestens einer Endzone des Drahtes radial zur Lochplatte über eine Dicke erstreckt, die größer ist als die Dicke der Gesamtheit oder eines Teils des Restes von dessen Länge.

9. Wand (12) nach einem der Ansprüche 5 bis 8, wobei sich mindestens zwei sich von den Enddrähten (26A", 26B") unterscheidende Drähte (26"') über mindestens einen Abschnitt (30) nur von deren Länge radial zur Lochplatte über eine Dicke erstrecken, die größer ist als die Dicke des Restes von deren Länge, wobei die Abschnitte mit dieser größeren Dicke im Verhältnis zueinander versetzt angeordnet sind.

10. Wand (12) nach einem der Ansprüche 1 bis 9, wobei
diese mindestens eine Lochplatte einen Lochzylinder bildet, der sich in einer Längsrichtung erstreckt,
dieses mindestens eine Gitterelement eine Gitteranordnung in allgemeiner Form eines Zylinders bildet, die in Kontakt mit den Feststoffpartikeln stehen soll, und
die Gitteranordnung und der Lochzylinder konzentrisch sind.

11. Reaktor, umfassend eine Wand (12) nach einem der Ansprüche 1 bis 10.

12. Katalytische Reformiereinheit mit einem Reaktor nach Anspruch 11.

13. Katalytische Reformiereinheit nach Anspruch 12, wobei die Wand nach einem der Ansprüche 1 bis 10 eine innere Zylinderwand ist.

14. Verfahren zum Herstellen eines Gitterelements für eine Wand nach einem der Ansprüche 1 bis 10 durch metallischen 3D-Druck.

## Claims

1. A cylindrical wall (12) for filtering solid particles in a fluid, through which said fluid is capable of circulating, said wall comprising
at least one perforated plate (23) having a finite radius of curvature, and
at least one grid element (22) superposed on said perforated plate, said grid element comprising a plurality of rigid wires (26, 26A, 26B, 26C, 26D) extending in a longitudinal direction and arranged adjacent to each other in order to filter out solid particles,
**characterised in that**
the grid element is arranged so that the wires are rigidly interconnected only by means of connections (27) between adjacent wires, each connection between two adjacent wires occupying only a portion of the length of said wires, and having a thickness less than or equal to the thickness of said wires near said connection.

2. The wall (12) according to claim 1, wherein
each connection (27) between two wires (26, 26A, 26B, 26C, 26D) extends radially between an internal connection end (32) opposite the perforated plate and an external connection end (33),
near said connection, each of said two wires extends radially between an internal wire end intended to be opposite the perforated plate and an external wire end (29),
**characterised in that**
for at least one connection between two wires, the external end of said connection is short of the external wire ends of said two adjacent wires, such that said two wires and said connection define a groove (35) forming a passage between the spaces between said wires on either side of said connection.

3. The wall (12) according to claim 1 or 2, wherein at least one wire (26, 26A, 26B, 26C, 26D) has, along its entire length, a section of which the width, in the tangential direction, is smaller at a first wire section end opposite the perforated plate than at a second wire section end (29) opposite said first end.

4. The wall according to any one of claims 1 to 3, wherein, for at least one wire (26'; 26", 26A", 26B") rigidly connected to a first and a second adjacent wire situated on either side of said wire, the connections (27'; 27") rigidly connecting said wire to the first adjacent wire are offset relative to the connections rigidly connecting said wire to the second adjacent wire.

5. The wall (12) according to any one of claims 1 to 4, wherein at least one wire (26A, 26B, 26C, 26D; 26", 26A", 26B") extends, over at least part of its length, radially towards the perforated plate over a thickness greater than the thickness of other wires (26; 26") of the grid element or than the thickness of said at least one wire (26") over the rest of its length.

6. The wall (12) according to claim 5, wherein the grid element comprises two end wires (26A, 26B; 26A", 26B") forming two opposite edges of the grid element,
**characterised in that** at least one of the two end wires of the grid element has a thickness greater than the thickness of all or some other wires (26, 26C; 26", 26"') of the grid element.

7. The wall (12) according to claim 5 or 6, wherein at least one of the wires (26C, 26D) distinct from the end wires (26A, 26B) of the grid element has a thickness greater than the thickness of all or some other wires (26) of the grid element.

8. The wall (12) according to any one of claims 5 to 7, wherein at least one wire (26", 26"') distinct from the end wires (26A", 26B") extends, over at least one portion (28") only of its length to at least one end zone of said wire, radially towards the perforated plate over a thickness greater than the thickness of all or part of the rest of its length.

9. The wall (12) according to any one of claims 5 to 8, in which at least two wires (26''') distinct from the end wires (26A", 26B") extend, over at least one portion (30) only of their length, radially towards the perforated plate over a thickness greater than the thickness of the rest of their length, said portions having this greater thickness being arranged offset from one another.

10. The wall (12) according to any one of claims 1 to 9, wherein
said at least one perforated plate forms a perforated cylinder extending in a longitudinal direction,
said at least one grid element forms a grid assembly, generally in a cylinder shape, intended to be in contact with the solid particles, and
the grid assembly and the perforated cylinder are concentric.

11. A reactor comprising a wall (12) according to any one of claims 1 to 10.

12. A catalytic reforming unit comprising a reactor according to claim 11.

13. The catalytic reforming unit according to claim 12, wherein the wall according to any of claims 1 to 10 is an inner cylinder wall.

14. A method of manufacturing a grid element for a wall according to any one of claims 1 to 10 by metal 3D printing.
